# EUROPEAN PATENT APPLICATION

(11) **EP 1 721 921 A1**
(43) Date of publication of application: **15.11.2006**
(21) Application number: 06009510.6
(22) Date of filing: 09.05.2006
(51) Int. Cl.: C08G 18/62, C08G 18/70, C09D 175/04

(54) **Method for colouring posts and paint applied thereby**

(30) Priority: 10.05.2005 BE 200500232
(71) Applicant: Berten, Lieven, 8510 Rollegem (BE)
(72) Inventor: Berten, Lieven, 8510 Rollegem (BE)
(74) Representative: Donné, Eddy

(57) **Abstract**

Method for colouring a post, which mainly consists in applying a layer of paint on a part of the post to be coloured, characterised in that the applied paint mainly consists of an acryl polyol dispersion and water-soluble isocyanate.

## Description

The present invention concerns a method for colouring posts, in particular of plastic windows, doors or the like.

It is known to colour plastic posts of windows or the like with a paint containing aliphatic, aromatic or cycloaliphatic isocyanates on the one hand and polyamide granules on the other hand.

A disadvantage of the above-described method is that said isocyanates are water-insoluble and, consequently, must be solved in hydrophobic solvents which, as is known, are harmful to the environment.

Also other paints applied in the field of plastic windows and doors are all water-insoluble up to now, since water-soluble paint is disadvantageous in that it loses colour under the influence of ultraviolet radiation.

The present invention aims to remedy the above-mentioned and other disadvantages.

To this end, the invention concerns a method for colouring posts, which mainly consists in applying a layer of paint on a part of the post to be coloured, whereby the applied paint mainly consists of an acryl polyol dispersion and water-soluble isocyanate.

An advantage of the present invention is that the applied paint, in its liquid state, is water-soluble and hardens as mainly water evaporates, which is not harmful to the environment.

The present invention also concerns a paint which can be applied with the above-described method according to the invention, which paint mainly consists of an acryl polyol dispersion and a water-soluble isocyanate.

Preferably, also granules on the basis of a polyolefin or a polyamide are mixed in the paint as well.

In order to better explain the characteristics of the present invention, the following preferred method for colouring a post, as well as for a paint applied thereby, will be described as an example only without being limitative in any way.

A preferred method for colouring a post for plastic windows or the like consists in manufacturing the post by means of extrusion or the like and by consequently painting it with a paint on the basis of an acryl polyol dispersion and a water-soluble isocyanate, whereby granules on the basis of a polyolefin or a polyamide are either or not mixed in this paint.

The dimensions of the above-mentioned granules are hereby preferably calibrated so as to be able to obtain a smooth looking layer of paint.

It is clear that the paint can be applied in different layers and that the above-mentioned post, depending on its use, can be painted on one or several sides.

The applied paint is then subjected to a drying process which can be either or not advanced by means of a heat treatment or air drying.

After the post has been coloured, it can be sawn and milled out locally so as to create space to apply a lock or the like, after which several of such posts can be assembled to form window frames or the like.

It should be noted that it is also possible to colour the posts only after they have been sawn and milled out.

It is clear that the above-described method can also be applied to colour existing windows or the like or recycled window posts or the like in an environment-friendly manner.

The present invention is by no means limited to the above-described preferred method according to the invention; on the contrary, a post can be coloured according to several variants while still remaining within the scope of the invention, whereas a paint applied thereby can be made according to several variants while still remaining within the scope of the invention.

## Claims

1. Method for colouring a post, which mainly consists in applying a layer of paint on a part of the post to be coloured, **characterised in that** the applied paint mainly consists of an acryl polyol dispersion and water-soluble isocyanate.

2. Method according to claim 1, **characterised in that** the post is coloured before or after it has been sawn up to a jamb or joist for a window frame or the like.

3. Method according to claim 1, **characterised in that** the post is coloured before several posts are assembled to form a window frame or the like.

4. Method according to any one of the preceding claims, **characterised in that** the above-mentioned paint hardens after it has been applied, whereby this hardening is advanced by means of a heat treatment and/or air drying.

5. Paint which can be applied with a method according to any one of claims 1 to 4, **characterised in that** it mainly consists of an acryl polyol dispersion and a water-soluble isocyanate.

6. Paint according to claim 5, **characterised in that** the paint contains granules made of a polyolefin and/or a polyamide.
